# EUROPEAN PATENT SPECIFICATION

(11) **EP 1 403 197 B1**
(45) Date of publication and mention of the grant of the patent: **12.11.2008**
(21) Application number: 03103438.2
(22) Date of filing: 18.09.2003
(51) Int. Cl.: B65G 51/06

(54) **Pneumatic dispatch cartridge**
Rohrpostpatrone
Cartouche de transporteurs pneumatiques

(30) Priority: 26.09.2002 NL 1021538
(43) Date of publication of application: 31.03.2004
(73) Proprietor: Ergotrans B.V., 7324 AL Apeldoorn (NL)
(72) Inventor: Beltman, Frederik, Antonie, 7437 GA Bathmen (NL); Dragt, Jan-Coen, 7323 KB Apeldoorn (NL)
(74) Representative: Voncken, Bartholomeus Maria Ch.

(56) References cited:
- DE-C- 890 478
- DE-U- 20 102 433
- FR-A- 1 372 206
- US-A- 3 073 546

## Description

The invention relates to a pneumatic dispatch cartridge according to the preamble of the main claim.

Such a pneumatic dispatch cartridge already is known from FR 1 372 206 and DE 890 478.

Pneumatic dispatch cartridges for use in a pneumatic dispatch system can be used for transporting various objects. Most common is the transportation of documents and/or small-sized goods. In other applications, however, a pneumatic dispatch cartridge can also be used for transporting flowable goods, such as liquids. Such an application is found in hospitals and laboratories, for example, where the pneumatic dispatch system can be used for despatching (blood) samples, amongst other things. It stands to reason that stringent requirements are made with regard to the closure of the access opening of the cartridge housing in the case of such an application. After all, the access opening must be prevented from opening unintentionally during transport of a pneumatic dispatch cartridge through the pneumatic dispatch system, which might lead to the contents of the pneumatic dispatch cartridge spreading over the pneumatic dispatch system.

Accordingly, it is an object of the present invention to provide an improved pneumatic dispatch cartridge of the present type, in which the closure means can guarantee a reliable closure of the access opening.

In order to accomplish the above object, the present invention provides a pneumatic dispatch cartridge in accordance with the features of the main claim.

The inventive combination of the lid and the clamping element enables a reliable closure of the access opening.

The effectiveness of the cooperation between the lid and the clamping element can be optimised in that, in accordance with a special embodiment of the pneumatic dispatch cartridge according to the invention, the lid and the clamping element are hingedly connected to the cartridge housing at substantially diametrically opposed positions with respect to the access opening.

The subclaims define preferred embodiments of the pneumatic dispatch cartridge according to the invention.

The invention will be explained in more detail hereinafter with reference to the drawing, which shows an embodiment of the pneumatic dispatch cartridge. In the drawing:
Fig. 1 shows an embodiment of the pneumatic dispatch cartridge according to the invention in an open position thereof;
Fig. 2 shows the pneumatic dispatch cartridge of Fig. 1 in a partially closed position thereof; and
Fig. 3 shows the same pneumatic dispatch cartridge in a fully open position thereof.

Before giving a detailed description of the Figures, it is noted that said Figures show the pneumatic dispatch cartridge partially in side elevation and partially in longitudinal section.

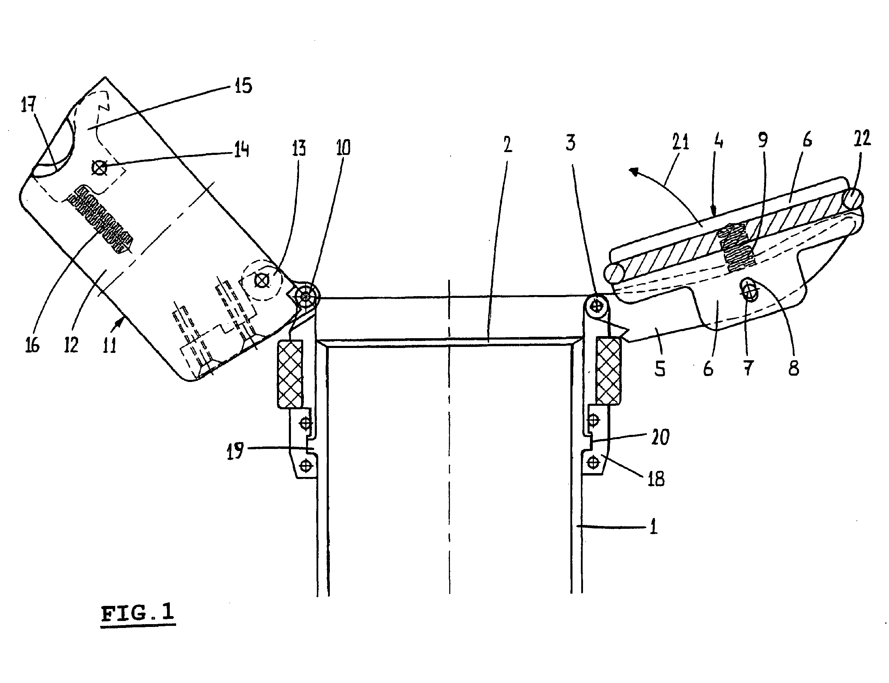

In Fig. 1, a pneumatic dispatch cartridge according to the invention is partially shown. The pneumatic dispatch cartridge comprises a cartridge housing 1, which is preferably made in one piece, in which housing at least one access opening 2 is formed. As is usual with pneumatic dispatch cartridges of this type, the access opening 2 is present on a frontal side of the cartridge housing 1. A corresponding access opening may be formed on the opposite frontal side (not shown) of the cartridge housing 1, which opening may or may not be provided with the closure means to be described in more detail hereinafter.

A first hinge 3 is connected to the cartridge housing 1 in a manner yet to be described. A lid 4 is hingedly connected to the cartridge housing 1 at the location of said first hinge 3.

In the illustrated embodiment, the lid 4 consists of a supporting arm 5, which is connected to the cartridge housing 1 at the location of the hinge 3, and a lid member 6, which is supported by said supporting arm 5. The supporting arm 5 and the lid member 6 are movably interconnected, e.g. by means of an assembly consisting of a pin 17 and an elongated hole 8. A spring mechanism, e.g. a compression spring 9, is present between the two parts. A flexible sealing element, e.g. an O-ring 22, is present in a circumferential groove of the lid member 6, which ring can mate with the inner circumferential wall of the cartridge housing 1 for sealing the access opening 2.

Diametrically opposite the first hinge 3 is a second hinge 10. Like the first hinge 3, the second hinge 10 is connected to the cartridge housing 1. A clamping element 11 is hingedly connected to the cartridge housing 1 at the location of said second hinge 10. In the illustrated embodiment, said clamping element is embodied as a cover 12 in which a hold-down roller 13 is mounted, and in which a locking hook 15, which pivots about a pivot, pin 14 is present. The locking hook 15 is loaded by a compression spring 16, with a recess 17 formed in the cover 12 giving access to said locking hook.

The hinges 3 and 10 may be connected to the cartridge housing 1 by means of a clamping ring 18. In the illustrated embodiment the cartridge housing 1 is to that end provided with a circular projection 19, whilst the clamping ring 18 is provided with a corresponding recess 20.

In order to be able to absorb large forces, the hinges 3 and 10 are preferably embodied as so-called multi-leaf hinges, i.e. hinges comprising a plurality of lamella-like hinge leaves arranged in side-by-side relationship.

The pneumatic dispatch cartridge according to the present invention is used as follows. When the access opening 2 is to be closed, the lid 4 is first pivoted about the hinge 3 from the position that is shown in Fig. 1 in the direction indicated by the arrow 21. Finally, the lid 4 reaches a closing position, in which the O-ring position sealingly mates with the inner circumferential wall of the cartridge housing 1 for closing the access opening 2. The lid member 6 accommodating the O-ring 22 is adjusted in a self-locating manner by the cooperation between the pin 7 and the elongated hole 8, whilst the compression spring 9 ensures that the lid member 6 is positioned in the access opening 2.

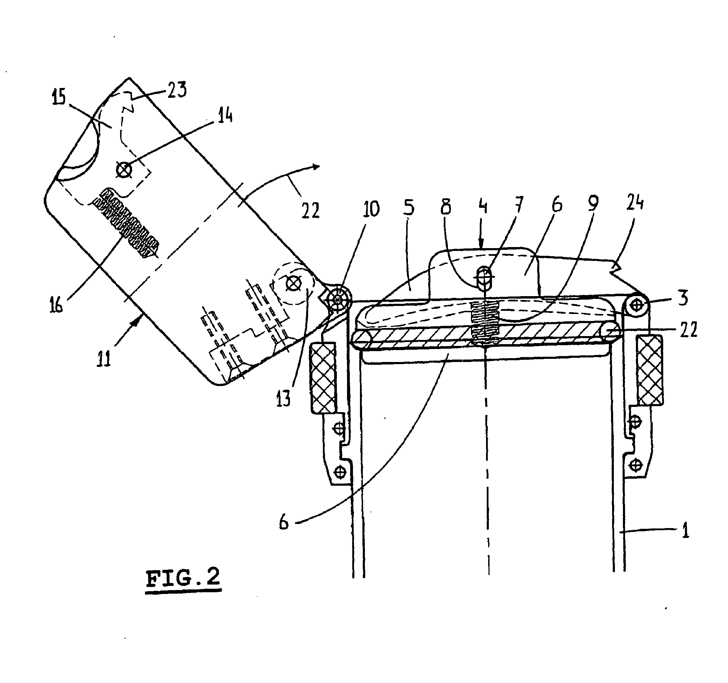

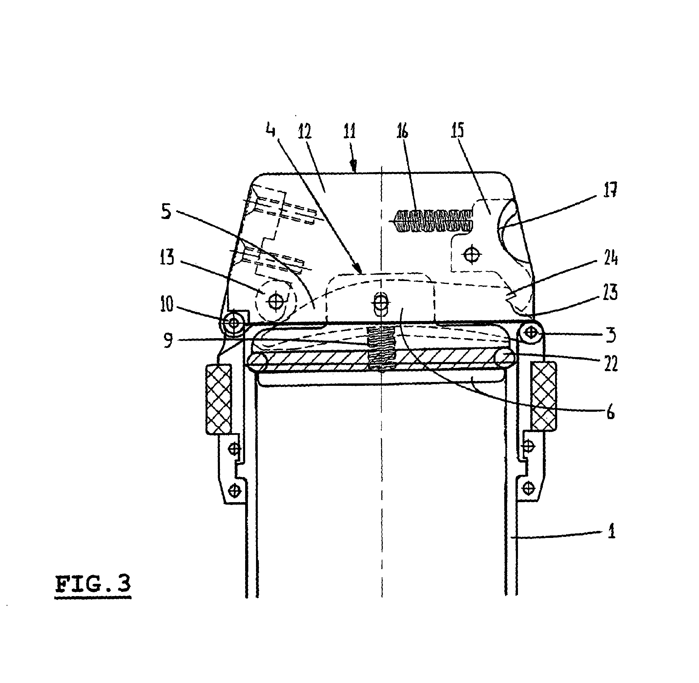

After the lid 4 has thus been pivoted to the closing position as shown in Fig. 2, the clamping element 11 is pivoted about its hinge 10. The hold-down roller 13 will engage the upper side of the supporting arm 5 to an increasing extent, so that the lid 4 is urged into the access opening 2 with increasing force. Shortly before the clamping element 11 reaches the clamping position as shown in Fig. 3, a rising edge 23 of the locking hook 15 comes into contact with a sloping upper side of a locking nose 24 formed on the supporting arm 5. As a result, the locking hook 15 is slightly pivoted about the pivot pin 14 against the force of the compression 16, until the end of the locking hook 15 has passed the locking nose 24 and the locking hook 15 returns to its starting position under the influence of the pressure force exerted by the compression spring 16.

The position of the hold-down roller 13 near the hinge 10 and the large distance between the hold-down roller 13 and the locking hook 15 make it possible to realise a large hold-down force of the hold-down roller 13 on the supporting arm 5 whilst using a relatively small locking force at the location of the locking hook 15 and the locking nose 24.

The cooperation between the hold-down roller 13 and the supporting arm 5 already starts at a point at which the clamping element 11 still includes a large angle with the access opening. This provides the following major advantage. If the locking engagement should become released within a channel of a pneumatic dispatch system, the clamping element 11 can only pivot through a small angle with respect to the access opening before coming into contact with the inner wall of the channel. In such a situation the hold-down roller 13 continues to firmly engage the supporting arm 5, however, as a result of which an effective closure of the access opening 2 remains ensured. Further pivoting of the clamping element 11, thereby releasing the access opening, is not possible until the cartridge has exited the channel. Conversely, the pneumatic dispatch cartridge according to the invention cannot be introduced into the channel until the access opening is effectively closed.

When the access opening 2 is to be released, starting from the position that is shown in Fig. 3, the locking member 15 can be engaged via the access opening 17 in order to be pivoted in such a manner that the end of the locking hook releases the locking nose 24. Following this, the clamping element 11 can first be pivoted to the position that is shown in Fig. 2, after which the lid 4 can be pivoted to the position that is shown in Fig. 1. Once the locking element has been released, said pivoting of the clamping element 11 can already take place automatically under the influence of the upward movement of the supporting arm 5 engaging the hold-down roller 13, which is effected by the compression spring 9. In this way a visual indication of the fact that the pneumatic dispatch cartridge according to the invention is not correctly closed (i.e. locked) is furthermore provided.

In the illustrated embodiment, the pneumatic dispatch cartridge can only be closed by pivoting the lid 4 and the clamping element 11 in a specific order (first the lid, then the clamping element). The same obtains with regard to opening the cartridge.

In the position that is shown in Fig. 3, the cover 12 of the clamping element 11 envelopes the lid 4 practically completely and substantially adjoins the circumferential edge of the access opening 2.

Preferably, the various parts of the pneumatic dispatch cartridge consist of materials that can be sterilised. In addition to means for tracing or controlling the pneumatic dispatch cartridge (e.g. a built-in chip), also means (e.g. a seal) that prevent unauthorized opening of the cartridge, as while as means for indicating any leakage from the pneumatic dispatch cartridge (e.g. chemically reacting indicators) may be used.

The invention is not restricted to the embodiment as described above, which can be varied in many ways within the scope of the invention as defined in the claims.

## Claims

1. A pneumatic dispatch cartridge comprising a cartridge housing (1) with at least one access opening (2) formed therein, which access opening can be closed by a lid (4) which is hingedly connected to the cartridge housing at the location of a first hinge (3), which lid closes the access opening in a closing position thereof, as well as a substantially rigid clamping element (11), which is likewise hingedly connected to the cartridge housing at the location of a second hinge (10), which clamping element, in a clamping position thereof, engages the lid in the closing position thereof, wherein locking means (15,24) are furthermore provided for retaining the clamping element in the clamping position thereof, the clamping element (11) is entirely positioned outside of the cartridge housing (1) in such a manner that in its clamping position it will extend substantially across the access opening (2) at the side of the lid (4) facing away from the access opening while engaging said side of the Lid(4).

2. A pneumatic dispatch cartridge according to claim 1, wherein said lid (4) and said clamping element (11) are hingedly connected to the cartridge housing (1) at substantially diametrically oppose positions with respect to the access opening (2).

3. A pneumatic dispatch cartridge according to claim 1 or 2, wherein the locking means consist of a locking hook (15) provided on the clamping element (11), which locking hook can mate with a locking nose (24) formed on the lid (4).

4. A pneumatic dispatch cartridge according to claim 3, wherein said locking hook (15) is movable against a spring load (16) to a position in which the locking nose (24) is released.

5. A pneumatic dispatch cartridge according to claim 3 or 4, wherein said locking hook (15) comprises a rising edge, which is to mate with the locking nose (24) upon movement of the clamping element (11) towards the clamping position.

6. A pneumatic dispatch cartridge according to any one of the preceding claims, wherein said clamping element (11) is provided with engaging means (13), such as a hold-down roller or the like, for engaging the lid (4).

7. A pneumatic dispatch cartridge according to any one of the preceding claims, wherein said lid (4) consists of a supporting arm (5), which is hingedly connected to the cartridge housing (1), and a lid member (6), which is supported by said supporting arm, for closing the access opening (2) in the closing position thereof.

8. A pneumatic dispatch cartridge according to claim 7, wherein said supporting arm (5) and said lid member (6) are interconnected by means (7,8) allowing a relative movement there between.

9. A pneumatic dispatch cartridge according to claim 8, wherein a spring mechanism, e.g. a compression spring (9) or the like, is present between said supporting arm (5) and said lid member (6).

10. A pneumatic dispatch cartridge according to any one of the preceding claims, wherein the hinges (3,10) of said lid (4) and said clamping element (11) are multi-leaf hinges.

11. A pneumatic dispatch cartridge according to any one of the preceding claims, wherein the hinges (3,10) of said lid (4) and said clamping element (11) are formed on a (possibly multipart) clamping ring (18), which can be clamped down round the cartridge housing (1).

12. A pneumatic dispatch cartridge according to claim 11, wherein said clamping ring (18) and said cartridge housing (1) are provided with mating projections (19) and recesses (20).

13. A pneumatic dispatch cartridge according to any one of the preceding claims, wherein said lid (4) is provided with a sealing element (22) that mates with a circumferential edge of the access opening (2) , e.g. an O-ring present in a circumferential groove of the lid member.

14. A pneumatic dispatch cartridge according to any one of the preceding claims, wherein the clamping member (11) is exter-nally shaped as a cover, which envelopes the lid (4) while adjoining a circumferential edge of the access opening (2) in the clamping position.

15. A pneumatic dispatch cartridge according to any one of the preceding claims, wherein the cartridge housing (1) is in one piece.

16. A pneumatic dispatch cartridge according to any one of the preceding claims, wherein the parts of said cartridge consist of materials that can be sterilised.

## Patentansprüche

1. Patrone für ein pneumatisches Rohrpostsystem, mit:
einem Patronengehäuse (1) mit mindestens einer darin ausgebildeten Zugangsöffnung (2), wobei die Zugangsöffnung durch einen Deckel (4) verschließbar ist, der an der Stelle eines ersten Scharniers (3) mit dem Patronengehäuse gelenkig verbunden ist, und wobei der Deckel in einer Schließposition davon die Zugangsöffnung verschließt; und
einem im Wesentlichen starren Klemmelement (11), das an der Stelle eines zweiten Scharniers (10) gleichermaßen gelenkig mit dem Patronengehäuse verbunden ist, wobei das Klemmelement in einer Klemmpostion davon mit dem Deckel in dessen Schließposition in Eingriff kommt;
wobei ferner eine Verriegelungseinrichtung (15, 24) zum Halten des Klemmelements in seiner Klemmposition bereitgestellt wird;
wobei das Klemmelement (11) derart vollständig außerhalb des Patronengehäuses (1) angeordnet ist, dass es sich in seiner Klemmposition an der von der Zugangsöffnung abgewandten Seite des Deckels (4) im Wesentlichen quer über die Zugangsöffnung (2) erstreckt, während es mit dieser Seite des Deckels (4) in Eingriff steht.

2. Patrone nach Anspruch 1, wobei der Deckel (4) und das Klemmelement (11) an im Wesentlichen diametral gegenüberliegenden Stellen bezüglich der Zugangsöffnung (2) mit dem Patronengehäuse (1) gelenkig verbunden sind.

3. Patrone nach Anspruch 1 oder 2, wobei die Verriegelungseinrichtung einen auf dem Klemmelement (11) angeordneten Verriegelungshaken (15) aufweist, der dazu geeignet ist, mit einem auf dem Deckel (4) ausgebildeten Verriegelungsvorsprung (24) in Eingriff zu kommen.

4. Patrone nach Anspruch 3, wobei der Verriegelungshaken (15) gegen die Kraft einer Feder (16) zu einer Position bewegbar ist, in der er mit dem Verriegelungsvorsprung (24) außer Eingriff steht.

5. Patrone nach Anspruch 3 oder 4, wobei der Verriegelungshaken eine ansteigende Kante aufweist, die dazu geeignet ist, mit dem Verriegelungsvorsprung (24) in Eingriff zu kommen, wenn das Klemmelement (11) zur Klemmposition hin bewegt wird.

6. Patrone nach einem der vorangehenden Ansprüche, wobei das Klemmelement (11) eine Eingriffseinrichtung (13) wie eine Andrück- oder Niederhalterolle aufweist, um mit dem Deckel (4) in Eingriff zu kommen.

7. Patrone nach einem der vorangehenden Ansprüche, wobei der Deckel (4) einen mit dem Patronengehäuse (1) gelenkig verbundenen Haltearm (5) und ein durch den Haltearm gehaltenes Deckelelement (6) zum Verschließen der Zugangsöffnung (2) in seiner Schließposition aufweist.

8. Patrone nach Anspruch 7, wobei der Haltearm (5) und das Deckelelement (6) durch eine Einrichtung (7, 8) miteinander verbunden sind, die eine Relativbewegung dazwischen ermöglicht.

9. Patrone nach Anspruch 8, wobei ein Federmechanismus, z.B. eine Druckfeder (9), zwischen dem Haltearm (5) und dem Deckelelement (6) angeordnet ist.

10. Patrone nach einem der vorangehenden Ansprüche, wobei die Scharniere (3, 10) des Deckels (4) und des Klemmelements (11) Scharniere mit mehreren Scharnierblättern sind.

11. Patrone nach einem der vorangehenden Ansprüche, wobei die Scharniere (3, 10) des Deckels (4) und des Klemmelements (11) auf einem (gegebenenfalls mehrteiligen) Klemmring (18) ausgebildet sind, der um das Patronengehäuse herum nach unten festklemmbar ist.

12. Patrone nach Anspruch 11, wobei der Klemmring (18) und das Patronengehäuse (1) ineinander greifende Vorsprünge (19) und Vertiefungen (20) aufweisen.

13. Patrone nach einem der vorangehenden Ansprüche, wobei der Deckel (4) ein Dichtelement (22) aufweist, das mit einem Umfangsrand der Zugangsöffnung (2) in Eingriff steht, z.B. einen in einer Umfangsnut des Deckelelements angeordneten O-Ring.

14. Patrone nach einem der vorangehenden Ansprüche, wobei das Klemmelement (11) äußerlich als Abdeckung geformt ist, die den Deckel (4) umschließt, während es in der Klemmposition an einem Außenumfangsrand der Zugangsöffnung anliegt.

15. Patrone nach einem der vorangehenden Ansprüche, wobei das Patronengehäuse (1) einteilig ausgebildet ist.

16. Patrone nach einem der vorangehenden Ansprüche, wobei die Teile der Patrone aus sterilisierbaren Materialien bestehen.

## Revendications

1. Cartouche d'expédition pneumatique comprenant un logement de cartouche (1) avec au moins une ouverture d'accès (2) formée dans celui-ci, laquelle ouverture d'accès peut être fermée par un couvercle (4) qui est relié de manière articulée au logement de cartouche à l'emplacement d'une première articulation (3), lequel couvercle ferme l'ouverture d'accès dans une position de fermeture de celui-ci, ainsi qu'un élément de serrage (11) sensiblement rigide, qui est de même relié de manière articulée au logement de cartouche à l'emplacement d'une deuxième articulation (10), lequel élément de serrage, dans une position de serrage de celui-ci, est en prise avec le couvercle dans la position de fermeture de celui-ci, dans laquelle des moyens de verrouillage (15, 24) sont en outre prévus pour retenir l'élément de serrage dans la position de serrage de celui-ci, l'élément de serrage (11) est positionné entièrement à l'extérieur du logement de cartouche (1) de manière à ce que, dans sa position de serrage, il s'étendra sensiblement en travers de l'ouverture d'accès (2) du côté du couvercle (4) orienté à l'opposé de l'ouverture d'accès tout en venant en prise avec ledit côté du couvercle (4).

2. Cartouche d'expédition pneumatique selon la revendication 1, dans laquelle ledit couvercle (4) et ledit élément de serrage (11) sont reliés de manière articulée au logement de cartouche (1) à des positions sensiblement diamétralement opposées par rapport à l'ouverture d'accès (2).

3. Cartouche d'expédition pneumatique selon la revendication 1 ou 2, dans laquelle les moyens de verrouillage consistent en un crochet de verrouillage (15) prévu sur l'élément de serrage (11), lequel crochet de verrouillage peut s'accoupler avec un nez de verrouillage (24) formé sur le couvercle (4).

4. Cartouche d'expédition pneumatique selon la revendication 3, dans laquelle ledit crochet de verrouillage (15) peut être déplacé contre une charge de ressort (16) vers une position dans laquelle le nez de verrouillage (24) est libéré.

5. Cartouche d'expédition pneumatique selon la revendication 3 ou 4, dans laquelle ledit crochet de verrouillage (15) comprend un bord montant, qui est destiné à s'accoupler avec le nez de verrouillage (24) lors d'un mouvement de l'élément de serrage (11) vers la position de serrage.

6. Cartouche d'expédition pneumatique selon l'une quelconque des revendications précédentes, dans laquelle ledit élément de serrage (11) est pourvu de moyens de mise en prise (13), tels qu'un rouleau de maintien ou similaire, pour venir en prise avec le couvercle (4).

7. Cartouche d'expédition pneumatique selon l'une quelconque des revendications précédentes, dans laquelle ledit couvercle (4) consiste en un bras de support (5), qui est relié de manière articulée au logement de cartouche (1), et un élément de couvercle (6), qui est supporté par ledit bras de support, pour fermer l'ouverture d'accès (2) dans la position de fermeture de celui-ci.

8. Cartouche d'expédition pneumatique selon la revendication 7, dans laquelle ledit bras de support (5) et ledit élément de couvercle (6) sont interconnectés par des moyens (7, 8) permettant une mouvement relatif entre eux.

9. Cartouche d'expédition pneumatique selon la revendication 8, dans laquelle un mécanisme à ressort, par exemple, un ressort de compression (9) ou similaire, est présent entre ledit bras de support (5) et ledit élément de couvercle (6).

10. Cartouche d'expédition pneumatique selon l'une quelconque des revendications précédentes, dans laquelle les articulations (3, 10) dudit couvercle (4) et dudit élément de serrage (11) sont des articulations mutilames.

11. Cartouche d'expédition pneumatique selon l'une quelconque des revendications précédentes, dans laquelle les articulations (3, 10) dudit couvercle (4) et dudit élément de serrage (11) sont formées sur une bague de serrage (éventuellement multipartie) (18) qui peut être serrée autour du logement de cartouche (1).

12. Cartouche d'expédition pneumatique selon la revendication 11, dans laquelle ladite bague de serrage (18) et ledit logement de cartouche (1) sont pourvus de protubérances (19) et d'évidements (20) d'accouplement.

13. Cartouche d'expédition pneumatique selon l'une quelconque des revendications précédentes, dans laquelle ledit couvercle (4) est pourvu d'un élément d'étanchéité (22) qui s'accouple avec un bord circonférentiel de l'ouverture d'accès (2), par exemple, un joint torique présent dans une gorge circonférentielle de l'élément de couvercle.

14. Cartouche d'expédition pneumatique selon l'une quelconque des revendications précédentes, dans laquelle l'élément de serrage (11) est formé extérieurement comme un couvercle, qui enveloppe le couvercle (4) alors qu'il est contigu à un bord circonférentiel de l'ouverture d'accès (2) dans la position de serrage.

15. Cartouche d'expédition pneumatique selon l'une quelconque des revendications précédentes, dans laquelle le logement de cartouche (1) est en une seule pièce.

16. Cartouche d'expédition pneumatique selon l'une quelconque des revendications précédentes, dans laquelle les parties de ladite cartouche consistent en des matériaux qui peuvent être stérilisés.
